# DEMANDE DE BREVET EUROPEEN

(11) **EP 1 277 614 A1**
(43) Date de publication de la demande: **22.01.2003**
(21) Numéro de dépôt: 01401950.9
(22) Date de dépôt: 19.07.2001
(51) Int. Cl.: B60P 3/14, B60P 3/34

(54) **Véhicule atelier modulable**

(71) Demandeur: Renault s.a.s., 92100 Boulogne Billancourt (FR)
(72) Inventeur: Gerard, Dominique, 78990 Elancourt (FR)

(57) **Abrégé**

Véhicule modulable (1) comportant une caisse (3) montée sur des trains roulants (5) en contact avec le sol et un module (12 ; 112) monté à mobilité sur la caisse (3) entre une position repliée de roulage du véhicule (1) et une position déployée d'extension du véhicule (1) caractérisé en ce ledit module (12 ; 112) comporte un toit (30 ; 122, 132A) monté à mobilité par rapport à ladite caisse (3) et un panneau frontal (32 ; 132) monté sur ledit toit (30 ; 122, 132A) de telle manière qu'en position déployée d'extension, ledit module (12 ; 112) ménage un toit (30 ; 122, 132A) et un panneau frontal (32 ; 132) sur au moins une portion d'un côté (10) de ladite caisse (3), dégage au moins une ouverture (60) de communication entre ladite caisse (3) et ledit module (12 ; 112) sur ledit côté 10 et dégage un espace abrité entre ledit toit (30 ; 122, 132A), ledit panneau frontal (32 ; 132), ledit côté (10) de ladite caisse (3) et ledit sol.

## Description

La présente invention se rapporte à un véhicule modulable comportant une caisse montée sur des trains roulants et un module monté à mobilité sur la caisse entre une position repliée de roulage du véhicule et une position déployée d'extension du véhicule.

Elle se rapporte en particulier à un véhicule atelier dont le module est destiné à abriter un mécanicien intervenant pour l'entretien et de petites réparations sur un véhicule.

On connaît par le brevet DE 31 40 902 un véhicule atelier comportant une plate forme modulable en largeur sur laquelle peuvent être placés des panneaux déterminant un logement pour un véhicule à réparer. Un pan incliné permet de faire monter le véhicule à réparer sur la plate forme, à l'abri dans le logement.

Un tel véhicule d'intervention n'est pas rapide à rendre opérationnel, d'autant qu'il nécessite la mise en oeuvre de pieds de maintien pour stabiliser l'installation de la plate forme. Il ne convient pas pour un véhicule atelier.

Dans la demande de brevet WO 00 69 095, un véhicule comporte un module sur chacun de ses côtés pour l'extension de la capacité d'habitabilité de la caisse. Chaque module comporte un panneau avant, un panneau arrière, un panneau de côté, un panneau de toit et un panneau de sol. Le panneau de toit est monté pivotant selon un axe horizontal par rapport à une partie supérieure dudit côté de véhicule. Les panneaux avant, arrière et de côté sont montés fixement les uns aux autres et sont montés à coulissement par rapport audit côté du véhicule. Le panneau de sol est par exemple monté pivotant par rapport au panneau de côté.

Un tel module d'extension est adapté pour agrandir rapidement la capacité de logement de la caisse.

La demande de brevet WO 00 69 095 ne propose pas d'application d'un tel module pour un véhicule atelier, en particulier, il ne propose pas de moyens pour permettre l'accès d'un véhicule à réparer sur la plate forme de la caisse, dans l'abri défini par la caisse et le module.

L'un des buts de l'invention est de proposer un véhicule atelier modulable adapté à être utilisé rapidement et quelles que soient les conditions climatiques.

Un autre but de l'invention est de proposer un véhicule modulable adapté à être utilisé comme un atelier sans utiliser de pan incliné pour faire entrer le véhicule à réparer où à entretenir dans l'abri défini par la caisse et le module. En effet, un tel pan incliné est pénalisant quand le véhicule à réparer ne peut pas se mouvoir par ses propres moyens, ce qui oblige le mécanicien à utiliser un treuil pour faire monter le véhicule à réparer sur la plate forme de la caisse.

Un autre but de l'invention est de proposer un véhicule modulable adapté à être utilisé comme un atelier en pouvant réparer ou entretenir un véhicule positionné à même le sol.

Dans ce but, l'invention propose un véhicule modulable comportant une caisse montée sur des trains roulants en contact avec le sol et un module monté à mobilité sur la caisse entre une position repliée de roulage du véhicule et une position déployée d'extension du véhicule caractérisé en ce ledit module comporte un toit monté à mobilité par rapport à ladite caisse et un panneau frontal monté sur ledit toit de telle manière qu'en position déployée d'extension, ledit module ménage un toit et un panneau frontal sur au moins une portion d'un côté de ladite caisse, dégage au moins une ouverture de communication entre ladite caisse et ledit module sur ledit côté et dégage un espace abrité entre ledit toit, ledit panneau frontal, ledit côté de ladite caisse et ledit sol.

Selon d'autres caractéristiques de l'invention :
- le véhicule est caractérisé en ce que le toit est monté à coulissement par rapport à la caisse,
- le véhicule est caractérisé en ce que le panneau frontal est monté rigidement par rapport au toit,
- le véhicule est caractérisé en ce que le panneau frontal ferme au moins pour partie le côté de la caisse en position repliée du module,
- le véhicule est caractérisé en ce qu'il comporte un auvent qui, en position de fermeture pour la position repliée du module, ferme au moins pour partie le côté de la caisse sur laquelle il est monté pivotant et recouvre le panneau frontal et qui, en position d'ouverture, dégage une embrasure pour permettre le débattement du module entre sa position repliée et sa position déployée,
- le véhicule selon l'une quelconque des revendications précédentes, caractérisé en ce que au moins l'un du toit et du panneau frontal comporte des montants et des traverses rigides supportant des vitrages,
- le véhicule est caractérisé en ce que le module comporte au moins un panneau transversal apte à s'étendre entre un bord vertical de l'ouverture et un bord vertical du panneau frontal,
- le véhicule est caractérisé en ce le panneau frontal comporte un pan apte à s'étendre jusqu'au sol,
- le véhicule est caractérisé en ce le panneau transversal comporte un pan apte à s'étendre jusqu'au sol,
- le véhicule est caractérisé en ce que le toit est monté à coulissement par rapport à la caisse et comporte deux parties mutuellement coulissantes.

D'autres caractéristiques et avantages de l'invention apparaîtront clairement à la lecture de la description suivante de plusieurs modes de réalisation non limitatifs de celle-ci, en liaison avec les dessins annexés sur lesquels :
- la figure 1 est une vue d'un véhicule selon l'invention dont un auvent est déployé et un module d'extension est placé entre sa position repliée et sa position déployée,
- la figure 2 est vue du véhicule selon l'invention de la figure 1 dont le module est en position déployée et un panneau transversal est placé quasiment en position repliée,
- la figure 3 est vue du véhicule selon l'invention de la figure 1 dont un panneau transversal est placé entre sa position repliée et sa position déployée,
- la figure 4 est une vue d'une variante de véhicule selon l'invention dont un module d'extension est placé quasiment en position repliée,
- la figure 5 est une vue du véhicule selon l'invention de la figure 4 dont le toit et le panneau frontal du module d'extension sont en position déployée,
- la figure 6 est une vue d'une autre variante de véhicule selon l'invention dont un module d'extension est placé quasiment en position repliée.

Dans la description qui va suivre, les composants identiques ou analogues sont désignés par les mêmes références numériques sur l'ensemble des figures.

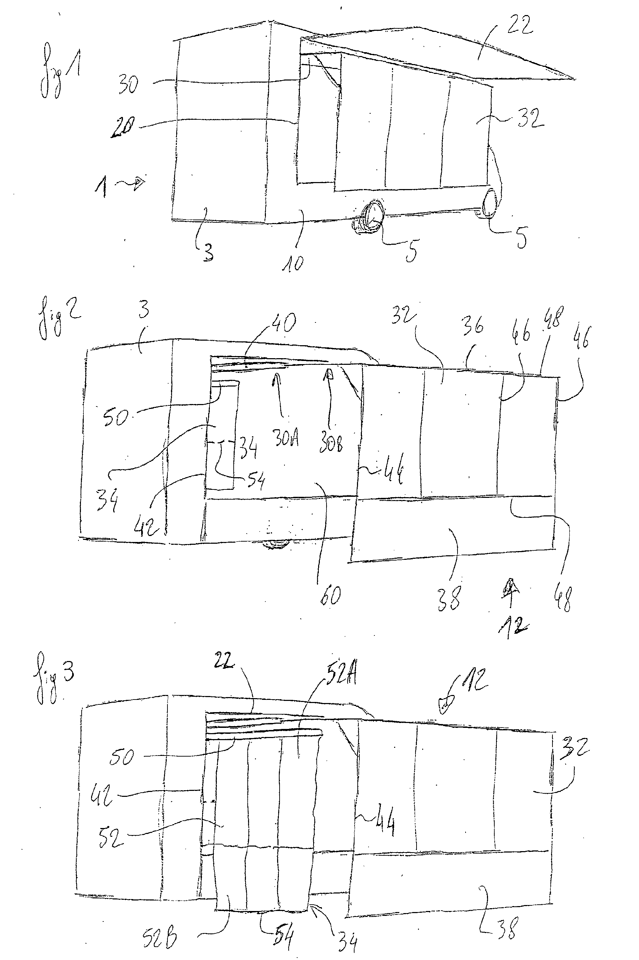

Comme représenté à la figure 1, le véhicule 1 atelier selon l'invention comporte une caisse 3 montée sur des trains roulants 5 en contact avec le sol.

La caisse 3 comporte une cabine à l'avant du véhicule et, à l'arrière du véhicule, une zone de chargement. Sur la zone de chargement de la caisse, un côté 10 reçoit un module d'extension 12 destiné à ménager un logement sur le côté du véhicule pour abriter le mécanicien intervenant sur un véhicule qu'il aura préalablement placé dans le logement.

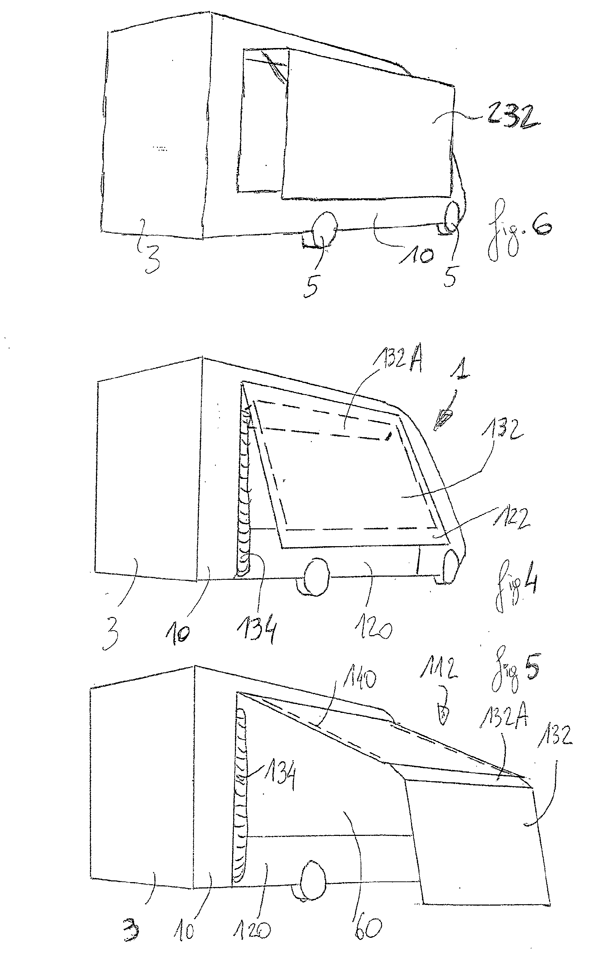

Dans l'exemple de réalisation représenté sur les figures 1 à 3, une embrasure 20 est ménagée sur le côté 10. En configuration de roulage du véhicule 1 (non représentée), l'embrasure 20 est fermée par un auvent 22. Le module 12 est replié dans la caisse 3, derrière l'auvent 22. En configuration d'arrêt pour le déploiement du module 12, l'auvent doit être déployé vers l'extérieur. Il est mis en rotation vers le haut selon un axe horizontal situé sur le bord supérieur de l'embrasure 20. A la figure 1, l'auvent 22 est représenté dans sa position d'ouverture maximale.

Le module 12 comporte un toit 30 (figure 1), une paroi frontale 32 formant une façade principale du module 12 sur le côté et deux panneaux transversaux 34 formant une paroi avant et une paroi arrière du module 12.

Chacun du toit 12 et de la paroi frontale 32 comporte au moins un élément de structure rigide. Tel que représenté, le toit comporte des éléments de structure sur sa périphérie. La structure périphérique rigide entoure soit une toile tendue, soit une paroi rigide présentant une ou plusieurs parties, par exemple des plaques en matériau synthétique transparent.

Dans l'exemple de réalisation représenté sur les figures 1 à 3, le toit comporte deux parties 30A et 30B (figure 2). La largeur de chaque partie 30A et 30B du toit est au moins égale à la moitié de la largeur total du toit quand celui-ci est déployé au maximum (figure 2). La partie 30A est monté coulissante sur des coulisseaux 40 coopérant avec des glissières (non représentées) solidaires de la caisse 3. La partie 30B est montée coulissante sur des coulisseaux, par exemple un profilé solidaire de la partie avant et de la partie arrière de la structure de la partie 30B, coopérant avec des glissières solidaires de la partie 30A.

Le fait que le toit comporte deux parties 30A et 30B dont une première 30A coulisse par rapport à la caisse 3 et une deuxième 30B coulisse par rapport à ladite première 30A, permet avantageusement de disposer d'un module 12 dont la largeur sous toit est supérieure à la largeur de la caisse 3.

Dans l'exemple de réalisation représenté sur les figures 1 à 3, le panneau frontal 32 est monté solidaire de l'extrémité libre 36 de la partie 30B du toit 30.

Le panneau frontal 32 comporte des montants 46 et des traverses 48.

Sur la partie inférieure du panneau frontal 32, un pan souple 38 est monté de façon à prolonger la partie rigide du panneau frontal 32 jusqu'au sol. Le pan souple 38 est avantageusement lesté pour être plaqué contre le sol.

Le dégagement du module 12 sur le côté de la caisse 3 ménage une ouverture de communication 60 entre la caisse 3 et le module 12. Chaque panneau transversal 34 est apte à s'étendre entre un bord vertical 42 de l'ouverture 60 et un bord vertical 44 du panneau frontal 32.

Dans l'exemple de réalisation représenté sur les figures 1 à 3, chaque panneau transversal 34 comporte un coulisseau télescopique 50 monté coulissant par rapport à la caisse 3. Le coulisseau 50 porte des lames souples 52. Chaque lame souple 52 comporte deux parties, une partie supérieure 52A et un pan inférieur 52B. Chaque lame souple 52 est, par exemple à chacune de ses extrémités supérieures, fixée à une portion du coulisseau 50 par un crochet.

Chaque pan inférieur 52B est raccordée à l'extrémité inférieure de la partie supérieure 52A. L'extrémité libre 54 du pan 52B est apte à être en contact avec le sol. Chaque pan inférieur 52B est prévu pour être mobile entre une position repliée contre la partie supérieure 52A (figure 2) et une position déployée pour prolonger le panneau transversal 34 vers le sol.

La mise en oeuvre du véhicule atelier sur un lieu d'intervention est très rapide.

Il suffit au mécanicien d'ouvrir l'auvent 22 pour dégager l'embrasure 20, de manoeuvrer l'ensemble formé par le toit 30 et le panneau frontal 32 de sa position repliée dans la caisse 3 à sa position déployée sur le côté de la caisse en le faisant passer dans l'embrasure 20, de déployer par exemple le panneau transversal 34 avant, de faire pénétrer le véhicule dans le logement défini par le module 12, puis de déployer le panneau transversal 34 restant pour fermer le module. Si le mécanicien veut être parfaitement à l'abri, il déploie vers le sol le pan souple 38 et les pans inférieurs 52B. Le module 12 et la caisse 3 forment un espace abrité entre le toit 30, le panneau frontal 32, le côté de caisse 10 et le sol pour constituer un véritable atelier. Le dégagement du module 12 sur le côté de la caisse 3 ayant ménagé une ouverture de communication 60 avec la caisse, le mécanicien peut accéder aisément à des outils rangés dans la caisse 3. L'ouverture de communication 60 est sensiblement de la taille de l'embrasure 20.

La partie 30A du toit 30 peut se résumer aux deux coulisseaux 40 formant élément de structure et ne pas comporter de partie pleine centrale telle qu'une toile ou une paroi rigide. Dans ce cas, c'est l'auvent 22 qui sert de partie pleine pour fermer le module au niveau de la partie 30A.

En variante non représentée, chaque panneau transversal consiste en un rideau souple accroché sur une tringle montée à coulissement par rapport à la caisse.

En variante représentée à la figure 6, le véhicule ne comporte pas d'auvent. Le panneau frontal 32 ferme directement le côté 10 du véhicule en position de repliée du module 12.

En variante représentée sur les figures 4 et 5, un auvent 122 forme une première partie de toit d'un module 112. Un panneau 132 est monté pivotant et coulissant par rapport audit auvent 122. Il forme un panneau frontal et une deuxième partie de toit 132A. Le panneau 132 est par exemple stocké en position de repos contre l'auvent 122 comme représenté en trait pointillé à la figure 4. Pour son déploiement, il est monté pivotant par deux tenons (non représentés) engagés dans une glissière 140 (représentée en trait pointillé à la figure 5) permettant le coulissement du panneau frontal 132 à partir de sa position de stockage où les tenons sont situés à proximité de l'axe de pivotement de l'auvent 122. Le module 112 comporte des pans souples 134, par exemple des rideaux, enroulés à proximité d'un bord vertical 142 d'une embrasure 120 pour former des panneaux transversaux.

## Revendications

1. Véhicule modulable (1) comportant une caisse (3) montée sur des trains roulants (5) en contact avec le sol et un module (12 ; 112) monté à mobilité sur la caisse (3) entre une position repliée de roulage du véhicule (1) et une position déployée d'extension du véhicule (1) caractérisé en ce ledit module (12 ; 112) comporte un toit (30 ; 122, 132A) monté à mobilité par rapport à ladite caisse (3) et un panneau frontal (32 ; 132) monté sur ledit toit (30 ; 122, 132A) de telle manière qu'en position déployée d'extension, ledit module (12 ; 112) ménage un toit (30 ; 122, 132A) et un panneau frontal (32 ; 132) sur au moins une portion d'un côté (10) de ladite caisse (3), dégage au moins une ouverture (60) de communication entre ladite caisse (3) et ledit module (12 ; 112) sur ledit côté 10 et dégage un espace abrité entre ledit toit (30 ; 122, 132A), ledit panneau frontal (32 ; 132), ledit côté (10) de ladite caisse (3) et ledit sol.

2. Véhicule selon la revendication 1, **caractérisé en ce que** le toit (30 ; 122, 132A) est monté à coulissement par rapport à la caisse (3).

3. Véhicule selon l'une quelconque des revendications précédentes, **caractérisé en ce que** le panneau frontal (32 ; 132) est monté rigidement par rapport au toit (30).

4. Véhicule selon l'une quelconque des revendications précédentes, **caractérisé en ce que** le panneau frontal (32) ferme au moins pour partie le côté de la caisse (3) en position repliée du module (12).

5. Véhicule selon l'une quelconque des revendications 1 à 3, **caractérisé en ce qu'**il comporte un auvent qui, en position de fermeture pour la position repliée du module (12 ; 112), ferme au moins pour partie le côté (10) de la caisse (3) sur laquelle il est monté pivotant et recouvre le panneau frontal (32 ; 132) et qui, en position d'ouverture, dégage une embrasure (20 ; 120) pour permettre le débattement du module (12 ; 112) entre sa position repliée et sa position déployée.

6. Véhicule selon l'une quelconque des revendications précédentes, **caractérisé en ce que** au moins l'un du toit (30 ; 122, 132A) et du panneau frontal (32 ; 132) comporte des montants (46) et des traverses rigides (48) supportant des vitrages.

7. Véhicule selon l'une quelconque des revendications précédentes, **caractérisé en ce que** le module (12 ; 112) comporte au moins un panneau transversal (34 ; 134) apte à s'étendre entre un bord vertical (42 ; 142) de l'ouverture (20 ; 120) et un bord vertical (44) du panneau frontal (32 ; 132).

8. Véhicule selon l'une quelconque des revendications précédentes, caractérisé en ce le panneau frontal (32) comporte un pan (38) apte à s'étendre jusqu'au sol.

9. Véhicule selon la revendication 7, caractérisé en ce le panneau transversal (34) comporte un pan (52B) apte à s'étendre jusqu'au sol.

10. Véhicule selon l'une quelconque des revendications précédentes, **caractérisé en ce que** le toit (30) est monté à coulissement par rapport à la caisse et comporte deux parties (30A, 30B) mutuellement coulissantes.
